# EUROPEAN PATENT APPLICATION

(11) **EP 4 806 781 A1**
(43) Date of publication of application: **16.09.2026**
(21) Application number: 26162727.7
(22) Date of filing: 05.03.2026
(51) Int. Cl.: B64C 11/20, B64D 27/10, F01D 5/28

(54) **AIRFOIL WITH LEADING EDGE PROTECTOR FOR A FAN ASSEMBLY**

(30) Priority: 10.03.2025 US 202519074672
(71) Applicant: General Electric Company, Evendale, OH 45215 (US)
(72) Inventor: AJDELSZTAJN, Leonardo, Niskayuna, 12309 (US); SCHOONOVER, Jeffrey Jon, Niskayuna, 12309 (US)
(74) Representative: Openshaw & Co.

(57) **Abstract**

An airfoil (154) for an aircraft engine (100) includes a blade body (194) and a leading edge protector (225) operably coupled to the blade body (194). The leading edge protector (225) includes a preformed sheet (220) defining a nose portion (222) and two flange portions (224). The nose portion (222) and the flange portions (224) are arranged in the chordwise direction. The preformed sheet (220) further defines a defined point (230) located on the nose portion (222). An X-axis and a Y-axis are defined relative to the defined point (230). A deposit (232) is operably coupled with the nose portion (222) of the preformed sheet (220) and extends from the nose portion (222) along the flange portions (224) on opposing sides of the defined point (230) in the X-axis direction.

## Description

### FIELD

The present disclosure relates to an airfoil, which may be implemented within a gas turbine engine.

### BACKGROUND

A gas turbine engine generally includes a fan and a core arranged in flow communication with one another. In some instances, aircraft turbine engines may be operated under harsh conditions with high-speed airflow, and thus may encounter various foreign objects, such as sand, dust, ice, etc. As such, typical fan blades, particularly the leading edges of fan blades, may be susceptible to erosion and damage.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of a gas turbine engine in accordance with various aspects of the present disclosure;
FIG. 2 is a view of an airfoil of the gas turbine engine in accordance with various aspects of the present disclosure;
FIG. 3 is a cross-sectional view of the airfoil taken along the line III-III of FIG. 2;
FIG. 4 is a schematic view of an application system in accordance with various aspects of the present disclosure;
FIGS. 5A-F are cross-sectional views of a defined point of a preformed sheet taken along the line V-V of FIG 3 and an applied deposit on the sheet in accordance with various aspects of the present disclosure; and
FIG. 6 illustrates a diagram of a method for applying a plurality of layers of a cold spray deposit onto a defined point of a preformed sheet in accordance with various aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

As used herein, the terms "first," "second," and "third" may be used interchangeably to distinguish one component from another and are not intended to signify location or importance of the individual components. The singular forms "a", "an", and "the" include plural references unless the context clearly dictates otherwise. Furthermore, as used herein, the term "set" or a "set" of elements may be any number of elements, including only one.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein.

The terms "forward" and "aft", as used herein, refer to relative positions within a hybrid-electric gas turbine engine or vehicle, and refer to the normal operational attitude of the hybrid-electric gas turbine engine or vehicle. For example, with regard to a blade, forward refers to a position closer to the leading edge of the airfoil and aft refers to a position closer to the trailing edge.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. For example, when used in terms of fluid flow, fore/forward can mean upstream, and aft/rearward can mean downstream.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The drawings are for purposes of illustration only and the dimensions, positions, order, and relative sizes reflected in the drawings attached hereto can vary.

Furthermore, any arrangement of components to achieve the same functionality is effectively "associated" such that the functionality is achieved. Hence, any two components herein combined to achieve a particular functionality may be seen as "associated with" each other such that the defined functionality is achieved, irrespective of architectures or intermedial components. Likewise, any two components so associated can also be viewed as being "operably connected" or "operably coupled" to each other to achieve the defined functionality, and any two components capable of being so associated can also be viewed as being "operably couplable" to each other to achieve the defined functionality. Some examples of operably couplable include, but are not limited to, physically mateable, physically interacting components, wirelessly interactable, wirelessly interacting components, logically interacting, and/or logically interactable components.

As used herein, the term "fluid" as used herein may be a gas or a liquid. The term "fluid communication" means that a fluid is capable of making the connection between the areas specified.

As used herein, elements being "electrically connected," "electrically coupled," or "in signal communication" can include an electric transmission or signal being sent, received, or communicated to or from such connected or coupled elements. Furthermore, such electrical connections or couplings can include a wired or wireless connection, or a combination thereof.

Also, as used herein, while sensors may be described as "sensing" or "measuring" a respective value, sensing or measuring can include determining a value indicative of or related to the respective value, rather than directly sensing or measuring the value itself. The sensed or measured values can further be provided to additional components. For instance, the value may be provided to a controller module or processor, and the controller module or processor can perform processing on the value to determine a representative value or an electrical characteristic representative of said value.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially," is not to be limited to the precise value specified. In at least some instances, the approximating language may correspond to the precision of an instrument for measuring the value, or the precision of the methods or apparatus for constructing or manufacturing the components and/or systems. For example, the approximating language may refer to being within a ten percent margin.

As used herein, the term "composite material" refers to a material produced from two or more constituent materials, wherein at least one of the constituent materials is a non-metallic material. Example composite materials include polymer matrix composites (PMC), ceramic matrix composites (CMC), chopped fiber composite materials, etc.

As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers including oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₃), as well as glassy aluminosilicates.

In certain embodiments, the reinforcing fibers may be bundled and/or coated before inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition before forming the preform or after the formation of the preform. The preform may then undergo thermal processing and subsequent chemical processing to arrive at a component formed of a CMC material having a defined chemical composition. For example, the preform may undergo a cure or burn-out to yield a high char residue in the preform, subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher-temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds, and other like components, that would benefit from the lighter-weight and higher temperature capability these materials can offer.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth. As used herein, "RE" refers to a rare earth element or a mixture of rare earth elements. More specifically, the "RE" refers to the rare earth elements of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

Generally, the present disclosure is related to an aircraft engine and the formation of airfoils included in the operation of an aircraft engine fan. In some cases, the airfoils may each have a metal leading edge. The metal leading edge has thin sides to protect the blade faces (e.g. the suction side and/or the pressure side) and provide a surface for the attachment. Further, the metal leading edge may have a nose on the leading edge portion to provide protection from impact events (e.g. bird strike). The metal leading edge may be made up of a metal. However, after an impact event, the metal leading edge is generally replaced. As such, a leading edge protector of the present disclosure may be constructed with a preformed sheet and a cold spray additive on a nose portion of the preformed sheet. The preformed sheet may be made to wrap around the leading edge of the blade body. That is, the preformed sheet may form a U-shape around the leading edge of the blade body and extend towards a trailing edge on both the pressure side and the suction side. The sides of the "U-shape" may each be referred to as a flange portion of the preformed sheet, with the nose portion located between the two flange portions. As such, the cold spray additive may be applied to the nose portion of the preformed sheet and built up layer by layer to form the defined thickness and shape for the leading edge protector. In this way, the deposit may assist in preventing various objects (e.g. a bird) from impacting the preformed sheet by initially impacting the object prior to impacting other portions of the fan. In such instances, due to the contact with the object, the deposit may be altered in its geometry while generally preventing other portions of the fan from being altered. In turn, the leading edge protector may be repaired for additional use on the airfoil, such as by applying additional material to the deposit.

As such, the present disclosure is generally related to an airfoil defining a chordwise direction for an aircraft engine. The airfoil may include a blade body and a leading edge protector operably coupled to the blade body. The leading edge protector may include a preformed sheet defining a nose portion and two flange portions, wherein the nose portion and the flange portions are arranged along the chordwise direction. The preformed sheet may further define a defined point located on the nose portion, wherein an X-axis and a Y-axis are defined relative to the defined point. The leading edge protector may further include a deposit operably coupled with the nose portion of the preformed sheet and extending from the nose portion and extending along the flange portions on opposing sides of the defined point in the X-axis direction.

Further, the present disclosure also relates to a manufacturing system for a leading edge protector including a preformed sheet. The manufacturing system may include an applicator and a computing system. The applicator may include a nozzle, a frame operably coupled with the nozzle and supporting the nozzle in a defined position, and an actuator operably coupled with the nozzle and the frame, the actuator configured to alter a position of the nozzle along the frame relative to a defined point of the preformed sheet. Further, the computing system may be operably coupled with the nozzle, the computing system including a processor and associated memory, the memory storing instructions that, when implemented by the processor, configure the computing system to, activate the actuator to position the nozzle in a defined position relative to a defined point of the preformed sheet; and activate the nozzle to apply a cold spray to the preformed sheet to form a deposit on a nose portion of the preformed sheet, the cold spray exhausted from the nozzle along an application axis from a tip of the nozzle to the defined point. The cold spray may refer to any additive manufacturing material and process that is implemented at a low temperature with a solid state material thereby avoiding (partially or fully) melting a feedstock material. However, any non-cold spray additive manufacturing process may additionally or alternatively be implemented by the manufacturing system for an airfoil provided herein without departing from the scope of the present disclosure.

Moreover, the present disclosure also relates to a method of manufacturing a leading edge protector. The method may include forming a metallic preformed sheet. The method may also include positioning a nozzle to a first angle relative to a defined point on the preformed sheet to define a first position. In addition, the method may include forming a deposit by exhausting a cold spray along an application axis to form a first plurality of layers of the deposit on the sheet with the nozzle at the first angle relative to the defined point.

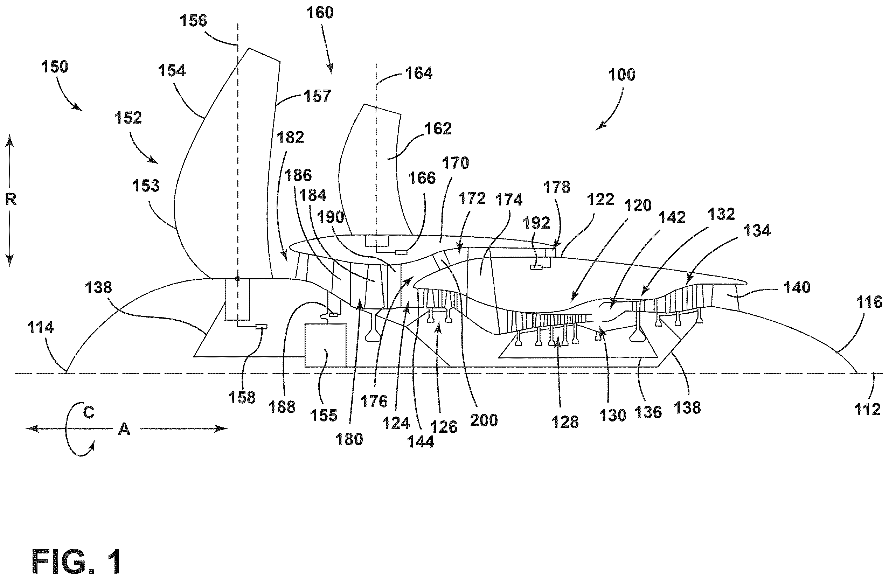

Referring now to FIG. 1, a schematic cross-sectional view of a gas turbine engine 100 is provided in accordance with various embodiments of the present disclosure. Particularly, FIG. 1 provides a turbofan engine having a rotor assembly with a single stage of unducted rotor blades. In such a manner, the rotor assembly may be referred to herein as an "unducted fan," or the entire engine 100 may be referred to as an "unducted turbofan engine." In addition, the engine 100 of FIG. 1 may include a third stream extending from the compressor section to a rotor assembly flowpath over the turbomachine.

For reference, the engine 100 defines an axial direction A, a radial direction R, and a circumferential direction C. Moreover, the engine 100 defines an axial centerline or longitudinal axis 112 that extends along the axial direction A. In general, the axial direction A extends parallel to the longitudinal axis 112, the radial direction R extends outward from and inward to the longitudinal axis 112 in a direction orthogonal to the axial direction A, and the circumferential direction extends three hundred sixty degrees (360°) around the longitudinal axis 112. The engine 100 extends between a forward end portion 114 and an aft end 116 portion, e.g., along the axial direction A.

The engine 100 may include a turbomachine 120 and a rotor assembly, also referred to as a fan section 150, positioned upstream of the turbomachine 120. Generally, the turbomachine 120 may include, in serial flow order, a compressor section, a combustion section, a turbine section, and an exhaust section. Particularly, as shown in FIG. 1, the turbomachine 120 may include a core cowl 122 that defines an annular core inlet 124. The core cowl 122 further encloses, at least in part, a low-pressure system and a high-pressure system. For example, the core cowl 122 depicted encloses and supports at least in part a booster or low pressure ("LP") compressor 126 for pressurizing the air that enters the turbomachine 120 through core inlet 124. A high-pressure ("HP"), multi-stage, axial-flow compressor 128 receives pressurized air from the LP compressor 126 and further increases the pressure of the air. The pressurized air stream flows downstream to a combustor 130 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high-speed system and low pressure/low-speed system interchangeably. Further, it will be appreciated that the terms "high" and "low" are used in this same context to distinguish the two systems, and are not meant to imply any absolute speed and/or pressure values.

The high-energy combustion products flow from the combustor 130 downstream to a high-pressure turbine 132. The high-pressure turbine 128 drives the high-pressure compressor 128 through a high-pressure shaft 136. In this regard, the high-pressure turbine 128 may be drivingly coupled with the high-pressure compressor 128. The high-energy combustion products then flow to a low-pressure turbine 134. The low-pressure turbine 134 drives the low-pressure compressor 126 and components of the fan section 150 through a low-pressure shaft 138. In this regard, the low-pressure turbine 134 may be drivingly coupled with the low-pressure compressor 126 and components of the fan section 150. The LP shaft 138 may be coaxial with the HP shaft 136 in this example embodiment. After driving each of the turbines 132, 134, the combustion products exit the turbomachine 120 through a turbomachine exhaust nozzle 140.

Accordingly, the turbomachine 120 defines a working gas flowpath or core duct 142 that extends between the core inlet 124 and the turbomachine exhaust nozzle 140. The core duct 142 is an annular duct positioned generally inward of the core cowl 122 along the radial direction R. The core duct 142 (e.g., the working gas flowpath through the turbomachine 120) may be referred to as a second stream.

The fan section 150 may include a fan 152, which may be the primary fan in this example embodiment. For the depicted embodiment of FIG. 1, the fan 152 may be an open rotor or unducted fan 152. In such a manner, the engine 100 may be referred to as an open-rotor engine.

As depicted, the fan 152 may include an array of airfoils 154 (one of which is shown in FIG. 1). The airfoils 154 are rotatable, e.g., about the longitudinal axis 112. As noted above, the fan 152 may be drivingly coupled with the low-pressure turbine 134 via the LP shaft 138. In various examples, such as the example shown in FIG. 1, the fan 152 may be coupled with the LP shaft 138 via a speed reduction gearbox 155, e.g., in an indirect-drive or geared-drive configuration.

Moreover, the array of airfoils 154 may be arranged in equal spacing around the longitudinal axis 112. Each airfoil 154 has a root and a tip and a span defined therebetween. Each airfoil 154 defines a central blade axis 156. In several examples, each airfoil 154 of the fan 152 may be rotatable about its central blade axis 156, e.g., in unison with one another. One or more actuators 158 may be provided to facilitate such rotation and/or used to change a pitch of the airfoils 154 about their respective central blades' axes 156. During operation of the engine 100 in a forward thrust operation, such as climb or cruise, each airfoil 154 of the fan 152 defines a leading edge 153 and a trailing edge 157.

The fan section 150 may further include a fan guide vane array 160 that may include fan guide vanes 162 (one of which is shown in FIG. 1) disposed around the longitudinal axis 112. In various examples, the fan guide vanes 162 are not rotatable about the longitudinal axis 112. Each fan guide vane 162 has a root, a tip, and a span defined therebetween. The fan guide vanes 162 may be unshrouded as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. In various examples, each fan guide vane 162 of the fan guide vane array 160 may be rotatable about its respective central blade axis 164, e.g., in unison with one another. One or more actuators 166 may be provided to facilitate such rotation and/or used to change a pitch of the fan guide vane 162 about its respective central blade axis 164. However, in other embodiments, each fan guide vane 162 may be fixed or unable to be pitched about its central blade axis 164. The fan guide vanes 162 may be mounted to the fan cowl 170.

As shown in FIG. 1, in addition to the fan 152, which may be unducted, a ducted fan 184 may be included aft of the fan 152, such that the engine 100 may include both a ducted and an unducted fan which both serve to generate thrust through the movement of air without passage through at least a portion of the turbomachine 120 (e.g., without passage through the HP compressor 128 and combustion section for the embodiment depicted). The ducted fan 184 may be rotatable about the same axis (e.g., the longitudinal axis 112) as the airfoil 154. The ducted fan 184 may be, for the embodiment depicted, driven by the low-pressure turbine 134 (e.g. coupled to the LP shaft 138). In the embodiment depicted, as noted above, the fan 152 may be referred to as the primary fan, and the ducted fan 184 may be referred to as a secondary fan. It will be appreciated that these terms "primary" and "secondary" are terms of convenience, and do not imply any particular importance, power, or the like.

The ducted fan 184 includes a plurality of fan blades (not separately labeled in FIG. 1), which may be arranged in a single stage, such that the ducted fan 184 may be referred to as a single-stage fan. The fan blades of the ducted fan 184 may be arranged in equal spacing around the longitudinal axis 112. Each blade of the ducted fan 184 has a root, a tip, and a span defined therebetween.

The fan cowl 170 annularly encases at least a portion of the core cowl 122 and may be generally positioned outward of at least a portion of the core cowl 122 along the radial direction R. Particularly, a downstream section of the fan cowl 170 may extend over a forward portion of the core cowl 122 to define a fan duct flowpath, or simply a fan duct 172. According to this embodiment, the fan flowpath or fan duct 172 may be understood as forming at least a portion of the third stream of the engine 100.

Incoming air enters through the fan duct 172 through a fan duct inlet 176 and exits through a fan exhaust nozzle 178 to produce propulsive thrust. The fan duct 172 may be an annular duct positioned generally outward of the core duct 142 along the radial direction R. The fan cowl 170 and the core cowl 122 may be connected and supported by a plurality of substantially radially-extending, circumferentially-spaced stationary struts 174 (one of which is shown in FIG. 1). The stationary struts 174 may each be aerodynamically contoured to direct air flowing thereby. Other struts in addition to the stationary struts 174 may be used to connect and support the fan cowl 170 and/or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl 122.

The engine 100 may also define or may include an inlet duct 180. The inlet duct 180 may extend between the engine inlet 182 and the core inlet 124/fan duct inlet 176. The engine inlet 182 may be defined generally at the forward end portion of the fan cowl 170 and may be positioned between the fan 152 and the fan guide vane array 160 along the axial direction A. The inlet duct 180 may be an annular duct that may be positioned inward of the fan cowl 170 along the radial direction R. Air flowing downstream along the inlet duct 180 may be split, not necessarily evenly, into the core duct 142, and the fan duct 172 by a fan duct splitter or leading edge 144 of the core cowl 122. In the embodiment depicted, the inlet duct 180 may be wider than the core duct 142 along the radial direction R. The inlet duct 180 may be also wider than the fan duct 172 along the radial direction R.

In several examples, the engine 100 may include one or more features to increase an efficiency of a third stream thrust, Fn_{3S} (e.g., a thrust generated by an airflow through the fan duct 172 exiting through the fan exhaust nozzle 178, generated at least in part by the ducted fan 184). In particular, the engine 100 may further include an array of inlet guide vanes 186 positioned in the inlet duct 180 upstream of the ducted fan 184 and downstream of the engine inlet 182. The array of inlet guide vanes 186 may be arranged around the longitudinal axis 112. For instance, the inlet guide vanes 186 are not rotatable about the longitudinal axis 112. Each inlet guide vanes 186 defines a central blade axis (not labeled for clarity), and may be rotatable about its respective central blade axis, e.g., in unison with one another. In such a manner, the inlet guide vanes 186 may be considered a variable geometry component. One or more actuators 188 are provided to facilitate such rotation and therefore may be used to change a pitch of the inlet guide vanes 186 about their respective central blade axes. However, in other embodiments, each inlet guide vanes 186 may be fixed or unable to be pitched about its central blade axis.

Further, located downstream of the ducted fan 184 and upstream of the fan duct inlet 176, the engine 100 may include an array of outlet guide vanes 190. As with the array of inlet guide vanes 186, the array of outlet guide vanes 190 is not rotatable about the longitudinal axis 112. However, for the embodiment depicted, unlike the array of inlet guide vanes 186, the array of outlet guide vanes 190 is configured as fixed-pitch outlet guide vanes.

Further, it will be appreciated that for the embodiment depicted, the fan exhaust nozzle 178 of the fan duct 172 may be further configured as a variable geometry exhaust nozzle. In such a manner, the engine 100 may include one or more actuators 192 for modulating the variable geometry exhaust nozzle. For example, the variable geometry exhaust nozzle may be configured to vary a total cross-sectional area (e.g., an area of the nozzle in a plane perpendicular to the longitudinal axis 112) to modulate an amount of thrust generated based on one or more engine operating conditions (e.g., temperature, pressure, mass flowrate, etc. of an airflow through the fan duct 172). A fixed geometry exhaust nozzle may also be adopted.

The combination of the array of inlet guide vanes 186 located upstream of the ducted fan 184, the array of outlet guide vanes 190 located downstream of the ducted fan 184, and the fan exhaust nozzle 178 may result in a more efficient generation of third stream thrust, Fn_{3S}, during one or more engine operating conditions. Further, by introducing a variability in the geometry of the inlet guide vanes 186 and the fan exhaust nozzle 178, the engine 100 may be capable of generating more efficient third stream thrust, Fn_{3S}, across a relatively wide array of engine operating conditions, including takeoff and climb (where a maximum total engine thrust Fn_{Total}, may be generally needed) as well as cruise (where a lesser amount of total engine thrust, Fn_{Total}, may be generally needed).

Moreover, referring still to FIG. 1, in various embodiments, air passing through the fan duct 172 may be relatively cooler (e.g., lower temperature) than one or more fluids utilized in the turbomachine 120. In this way, one or more heat exchangers 200 may be positioned in thermal communication with the fan duct 172. For example, one or more heat exchangers 200 may be disposed within the fan duct 172 and utilized to cool one or more fluids from the core engine with the air passing through the fan duct 172, as a resource for removing heat from a fluid, e.g., compressor bleed air, oil, or fuel.

In some examples, the heat exchanger 200 may be an annular heat exchanger extending substantially 360 degrees in the fan duct 172 (e.g., at least 300 degrees, such as at least 330 degrees). In such a manner, the heat exchanger 200 may effectively utilize the air passing through the fan duct 172 to cool one or more systems of the engine 100 (e.g., lubrication oil systems, compressor bleed air, electrical components, etc.). The heat exchanger 200 uses the air passing through duct 172 as a heat sink and correspondingly increases the temperature of the air downstream of the heat exchanger 200 and exits the fan exhaust nozzle 178.

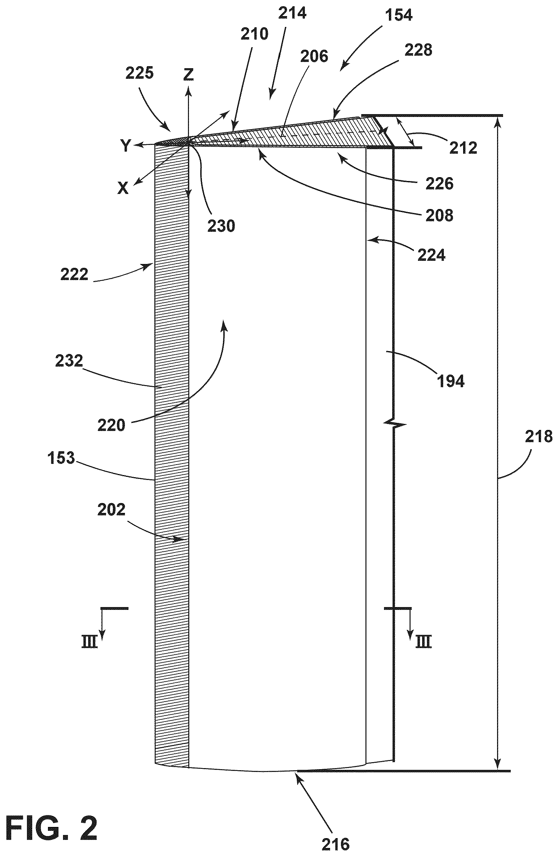

Referring now to FIG. 2, a schematic view of the airfoil 154 is shown in accordance with various aspects of the present disclosure. For the depicted embodiment, the airfoil 154 defines a forward portion 202 and an aft portion (not shown). The forward portion 202 may be spaced from the aft portion along a chord line 206 of the airfoil 154. As used herein, the forward portion 202 of the airfoil 154 refers to a portion of the airfoil 154 closer to the leading edge 153 of the airfoil 154 during the forward thrust flight operation of the engine 100 (see FIG. 1), and the aft portion (not shown) of the airfoil 154 refers to a portion of the airfoil 154 closer to a trailing edge 157 of the airfoil 154 during the forward thrust flight operation (see FIG. 1). Additionally, the airfoil 154 defines a suction side 208 and a pressure side 210. In some instances, the suction side 208 and the pressure side 210 are spaced along a thickness 212 of the airfoil 154. Further, the airfoil 154 defines a top portion 214 and a bottom portion 216. The top portion 214 may be spaced from the bottom portion 216 along a length 218 of the airfoil 154.

Referring still to FIG. 2, the airfoil 154 includes a blade body 194. In some examples, the sheet may be configured as a preformed sheet 220 of any geometry, thickness, etc., and may be operably coupled with the blade body 194, as depicted. In several examples, the airfoil 154 may additionally include a deposit 232 operably coupled with the preformed sheet 220 and the deposit 232 together making up a leading edge protector 225 of the airfoil 154.

The preformed sheet 220 may be constructed in any practicable manner to achieve a defined curve. For example, the preformed sheet 220 may be shaped using a mandrel, shears, a manual bending machine, a hydraulic bending machine, etc., and/or any combination of techniques to achieve the defined curve.

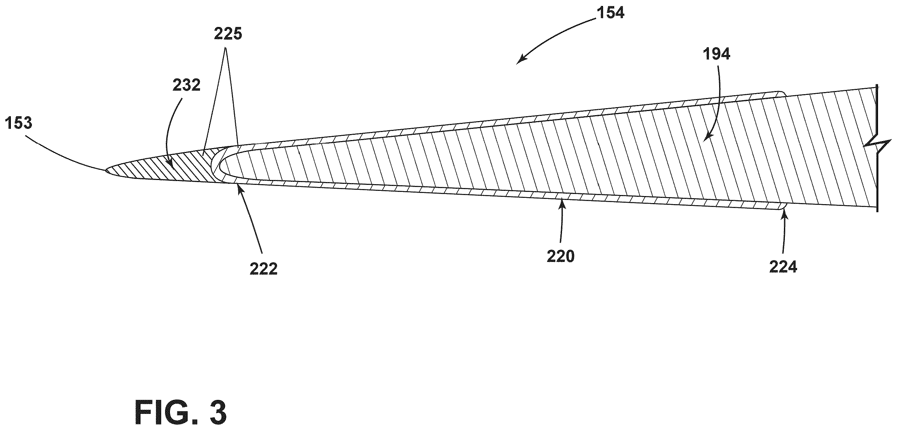

The preformed sheet 220 includes a nose portion 222 and two flange portions 224. The nose portion 222 and the flange portions 224 are arranged along the chord line 206, with the nose portion 222 being located forward of the flange portions 224 during the forward thrust flight operation of the engine 100. In particular, it will be appreciated that the nose portion 222 of the preformed sheet 220 is located at the leading edge 153 of the airfoil 154 beneath the deposit 232 (see, also, FIG. 3, described below), and the two flange portions 224 extend from the nose portion 222, away from the leading edge 153 and towards the trailing edge 157 (see FIG. 1), along the chord line 206. The chord line 206 may define a chordwise direction extending along the length of the chord line 206 in both directions. The preformed sheet 220 forms in part a suction surface 226 of the airfoil 154 and a pressure surface 228 of the airfoil 154. The suction surface 226 may define at least a part of the suction side 208 of the airfoil 154, and the pressure surface 228 may define at least part of the pressure side 210 of the airfoil 154.

The preformed sheet 220 may be made up of any material capable of withstanding certain loads. For example, preformed sheet 220 may be made up of a metallic material, ceramic material, or ceramic-matrix-composite.

Moreover, the blade body 194 and/or the preformed sheet 220 may be made up of any suitable material, such as a metallic material, including but not limited to an aluminum alloy, titanium alloy, nickel alloy, steel, composite material, or any practicable material and/or combination of materials. For example, the blade body 194 and/or the preformed sheet 220 may be made up of aluminum alloy 2000, 5000, 6000, 7000, or any variation of the same. In other cases, the airfoil 154 may be made up of a titanium alloy. In some cases, the blade body 194 and/or the preformed sheet 220 may be made up of titanium alloy Ti64, Ti6242, Ti17, or any variation of the same. For example, the airfoil 154 may be made up of Inconel 600, 601, 625, 690, 718, or any variation of the same. In various other cases, the blade body 194 and/or the preformed sheet 220 may be made up of a steel material. In other cases, the blade body 194 and/or the preformed sheet 220 may be made up of a martensitic steel, austenitic steel, ferritic steel, precipitation hardening steel, or any variation of the same. In yet other various cases, the blade body 194 and/or the preformed sheet 220 may be made up of ceramic materials and/or composite materials including polymer matrix composites (PMC), ceramic matrix composites (CMC), chopped fiber composite materials, or any combination thereof, as noted above. Further, in various cases, the blade body 194 and/or the preformed sheet 220 may be made up of any one or combination of the above listed materials, or any material suitable as determined by one of ordinary skill in the art.

With further reference to FIG. 2, the nose portion 222 further defines a defined point 230. The defined point 230 may be any defined point along the surface of the nose portion 222. For example, the defined point 230 may be located at the forwardmost point of the nose portion 222. Additionally, the defined point 230 may be defined by an origin of an X-axis, a Y-axis, and a Z-axis. In the example depicted in FIG. 2, the X-axis extends through the defined point 230, intersecting with both the suction side 208 and the pressure side 210 of the airfoil 154. Further, the X-axis extends in both a positive X-direction and a negative X-direction. For instance, the X-axis may intersect with the pressure side 210 of the airfoil 154 in the positive X-direction and with the suction side 208 of the airfoil 154 in the negative X-direction. Additionally, the X-axis shares an orthogonal relationship with both the Y-axis and the Z-axis. For example, the X-axis may extend tangentially in both the positive and negative direction in relation to the nose portion 222 of the preformed sheet 220.

Additionally, the Y-axis extends through the defined point 230 and may intersect with the nose portion 222 of the preformed sheet 220. Further, the Y-axis extends in both a positive and negative direction. For instance, the Y-axis extends in the positive Y-direction away from the surface of the nose portion 222 towards the forward portion 202 of the airfoil . The negative Y-direction extends opposite of the positive Y-direction, towards the aft portion of the airfoil. Additionally, the Y-axis shares an orthogonal relationship with both the X-axis and the Z-axis.

Referring still to FIG. 2, the Z-axis extends through the defined point 230 and intersects with the top portion 214 and the bottom portion 216 of the airfoil. Further, the Z-axis extends in both a positive Z-direction and a negative Z-direction. For instance, the Z-axis may extend in the positive Z-direction away from the top portion 214 of the airfoil 154 and in the negative Z-direction to intersect with the bottom portion of the airfoil 154. Additionally, the Z-axis may extend along the length 218 of the preformed sheet 220. For example, the Z-axis extends along the length 218 of the forwardmost edge of the nose portion 222.

Additionally, each of the axes defines one of a plurality of planes. For example, the X-axis and the Y-axis form an XY-plane at the intersection of the X-plane and the Y-plane.

In several examples, the deposit 232 may be operably coupled with the nose portion 222 of the preformed sheet 220. For example, the deposit 232 may be operably coupled to the forwardmost portion (e.g., leading edge) of the nose portion 222. In such instances, the deposit 232 extends outwardly for a length from the forwardmost point of the nose portion 222. Moreover, the deposit 232 may extend from the nose portion 222 of the preformed sheet 220 and extending along the flange portions 224 on opposing sides of the defined point 230 in the X-axis direction.

Referring now to FIG. 3, a cross-sectional view taken along the line III-III of FIG. 2 is illustrated. As illustrated, the airfoil 154 includes the preformed sheet 220 and the deposit 232, As depicted, in some cases, the preformed sheet 220 may be operably coupled to the blade body, and the deposit 232 may be operably coupled with the nose portion 222 of the preformed sheet 220. As such, the preformed sheet 220 and the deposit 232 may make up the leading edge protector 225 of the airfoil 154 as depicted. During operation, the deposit 232 may mitigate damage incurred during impact events (e.g. bird strike). That is, the deposit 232 may protect against impact to the preformed sheet and/or other portions of the fan 152. In such instances, due to the contact with the object, the deposit 232 may be altered in its geometry while generally preventing other portions of the fan 152 from being altered. In turn, the deposit 232 may be repaired for additional use of the airfoil 154. In some instances, the deposit 232 may be repaired by applying additional material to the deposit 232.

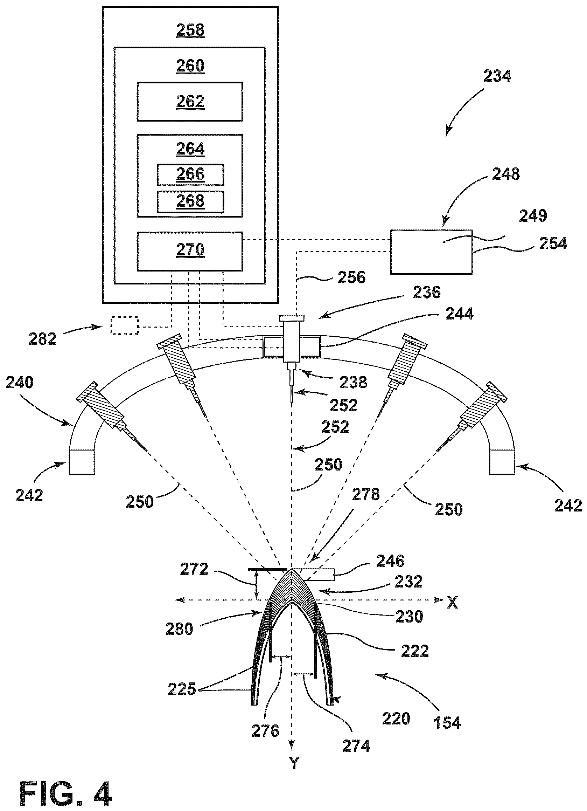

Referring now to FIG. 4, a view of an application system 234 for applying the deposit 232 to the preformed sheet 220 to form at least a portion of the airfoil 154, such as the leading edge protector 225, is provided in accordance with various aspects of the present disclosure. The application system 234 may be configured to apply the deposit 232 to the sheet 220, the airfoil 154, and/or any other component of the engine 100. In various examples, the application system 234 may implement any combination of components to apply the deposit 232 to the suitable substrate without departing from the teachings provided herein.

Referring still to the embodiment depicted in FIG. 4, the application system 234 includes an applicator 236 for applying the deposit 232 to the preformed sheet 220. In some cases, the preformed sheet 220 may be held in place by a mount, such that the defined point 230 and the surrounding application system 234 may maintain defined positioning. In some cases, the mount may be a mandrel upon which the preformed sheet 220 was shaped. In other cases, the mount may be any practicable structure capable of maintaining the defined positioning of the preformed sheet 220 for the construction of the leading edge protector 225. In various instances, the applicator 236 includes a nozzle 238, a frame 240 operably coupled with the nozzle 238 and supporting the nozzle 238 in a defined position, a rail 242 supporting the frame 240, and/or an actuator 244 operably coupled with the nozzle 238 and the frame 240 for altering the position the nozzle 238 along the frame 240 relative to the defined point 230 of the preformed sheet 220. In some cases, the frame 240 may move along the rail 242 to alter the position of the frame 240 along the Z-axis direction and/or the Y-axis. The frame 240 and the rail 242 may be configured in any manner to alter a position of the nozzle 238 relative to the defined point 230 without departing from the scope of the present disclosure. For example, the rail 242 may extend along the Z-axis providing means for the frame 240 to travel in the Z-axis direction. In this way, the frame 240 may position the nozzle 238 to apply the deposit 232 to the preformed sheet 220 while moving along the rail 242.

The nozzle 238 may be movable about the defined point 230 of the preformed sheet 220 to apply a plurality of layers 246 of cold spray 248 onto the nose portion 222 of the preformed sheet 220. For example, the nozzle 238 may be movable radially about the defined point 230 relative to the Y-axis (and/or any other axis). In such instances, the nozzle 238 may be configured to apply a plurality of layers 246 of the deposit 232 from various angles about the XY-plane to the preformed sheet 220, a previously applied layer of the deposit 232, and/or any other component of the airfoil 154. In the example shown in FIG. 4, a single nozzle 238 is shown with various other representative nozzle positions shown by the shaded nozzles 238. The applicator 236 may include any number of nozzles 238 that may be placed in any position without departing from the teachings provided herein.

In several examples, the applicator 236 may define an application axis 250 from the tip of the nozzle 238 to the defined point 230. The application axis 250 may define various angles and various lengths as the nozzle 238 may be moved relative to the defined point 230. For example, the application axis 250 may define a default position 252 in line with the Y-axis. In other embodiments, the application axis 250 may be offset from the Y-axis along the XY-plane. For example, the application axis 250 may define a position such as a 25-degree offset in the positive direction, a 45-degree offset in the positive direction, a 25-degree offset in the negative direction, a 45-degree offset in the negative direction, and/or any other offset.

In various examples, the applicator 236 may further include a cold spray reservoir 254. The cold spray reservoir 254 may be fluidly coupled with the nozzle 238. The cold spray reservoir 254 may provide the cold spray 248 to the nozzle 238 through a conduit 256 in such a way as to allow for the nozzle 238 to apply the deposit 232 to the preformed sheet 220. The cold spray reservoir 254 may be any suitable storage unit for the cold spray 248, such as a pressurized tank. The cold spray reservoir 254 may be configured to allow for the nozzle 238 to move through various angles about the defined point 230 while still supplying the nozzle 238 with cold spray 248.

The cold spray reservoir 254 may be pressurized with a carrier gas for the cold spray 248. The carrier gas may assist in exhausting the cold spray 248 from the nozzle 238. The carrier gas may be any suitable gas including inert gases, e.g. He, Ar, N₂, and/or any other gas. In some embodiments, a carrier gas having at least 50 volume % of nitrogen may be used for the cold spray 248. In various embodiments, the carrier gas may include at least 75 volume % nitrogen. In some embodiments, the carrier gas consists substantially of nitrogen. In several examples, the carrier gas used for depositing may be essentially free of helium. In some examples, the carrier gas temperature may be in the range from about 20° Celsius (C) to about 1200° C (e.g., about 500° C to about 1100° C, such as about 650° C to about 1100° C) when exiting the nozzle. In various embodiments, the application system 234 may accelerate the cold spray 248 to a velocity in the range from about 500 m/s to about 1100 m/s when exiting the nozzle 238. However, the spray may exit the nozzle 238 at any other velocity.

The cold spray 248 may be made up of any material capable of adhering to the preformed sheet 220 and building up the deposit 232. For example, the cold spray material may be a ceramic material coating, metallic particle coating, or any other suitable material for manufacturing the leading edge protector 225. For instance, the cold spray 248 may include a metal and/or a metal alloy, such as, for example, metals, refractory metals, alloys, superalloys, or composite materials. In some embodiments, the cold spray 248 has a composition compatible with the material of the preformed sheet 220, such as having a composition that may be substantially identical to the material of the preformed sheet 220. However, in other embodiments, the cold spray 248 may have a composition different from the material of the preformed sheet 220.

Referring still to FIG. 4, the application system 234 may further include a computing system 258. The computing system 258 may be configured to control the position of the nozzle 238 and/or selectively activate the nozzle 238 to exhaust the cold spray 248 to form the deposit 232 on the nose portion 222 of the preformed sheet 220. For example, the computing system 258 may be operably coupled to the nozzle 238. The computing system 258 may be configured to activate the actuator 244, which in turn, alters a position of the nozzle 238 to orient the application axis 250 at various angles relative to the defined point 230. For example, the computing system 258 may configure the actuator 244 to position the nozzle 238 in such a location that the application axis 250 may define a default position 252 in line with the Y-axis. In other embodiments, the application axis 250 may be offset from the Y-axis along the XY-plane. For example, the application axis 250 may be positioned at a 25-degree offset in the positive direction, a 45-degree offset in the positive direction, a 25-degree offset in the negative direction, a 45-degree offset in the negative direction, and/or in any other position.

Further, the computing system 258 may be configured to selectively activate the nozzle 238. For example, the computing system 258 may activate the nozzle 238 (such as through a variable valve within the nozzle 238) to apply a layer of cold spray 248 when the nozzle 238 is in a defined position necessary to build up the deposit 232. After a specified amount of time, the computing system 258 may be configured to deactivate the nozzle 238. The computing system 258 then may or may not move the nozzle 238 to a new angle relative to the defined point 230 before activating the applicator 236 to apply an additional layer of the deposit 232.

Referring particularly to the operation of the computing system 258, in at least certain embodiments, the computing system 258 can include one or more computing device(s) 260. The computing device(s) 260 can include one or more processor(s) 262 and one or more memory device(s) 264. The one or more processor(s) 262 can include any suitable processing device, such as a microprocessor, microcontroller, integrated circuit, logic device, and/or other suitable processing device. The one or more memory device(s) 264 can include one or more computer-readable media, including, but not limited to, non-transitory computer-readable media, RAM, ROM, hard drives, flash drives, and/or other memory devices.

The one or more memory device(s) 264 can store information accessible by the one or more processor(s) 262, including computer-readable instructions 266 that may be executed by the one or more processor(s) 262. The instructions 266 may be any set of instructions that when executed by the one or more processor(s) 262, cause the one or more processor(s) 262 to perform operations. For example, the memory devices 264 may store instructions 266 that when implemented by the one or more processor(s) 262 configure the computing system 258 to activate the actuator 244 to position the nozzle 238 in a defined position relative to the defined point 230 on the preformed sheet 220 and activate the nozzle 238 to apply the cold spray 248 to the preformed sheet 220 to form the deposit 2322 on the nose portion 222 of the preformed sheet 220. In this way, the cold spray 248 may be exhausted from the nozzle 238 along the application axis 250 from the tip of the nozzle 238 to the defined point 230. In some embodiments, the instructions 266 may be executed by the one or more processor(s) 262 to cause the one or more processor(s) 262 to perform operations, such as any of the operations and functions for which the computing system 258 and/or the computing device(s) 260 are configured, the operations for operating the application system 234, as described herein, and/or any other operations or functions of the one or more computing device(s) 260. The instructions 266 may be software written in any suitable programming language or may be implemented in hardware. Additionally, and/or alternatively, the instructions 266 may be executed in logically and/or virtually separate threads on the one or more processor(s) 262. The one or more memory device(s) 264 can further store data 268 that may be accessed by the one or more processor(s) 262. For example, the data 268 can include data indicative of power flows, data indicative of engine/ aircraft operating conditions, and/or any other data and/or information described herein.

The computing device(s) 260 can also include a network interface 270 used to communicate, for example, with the other components of the applicator 236, the application system 234, etc. For example, in the embodiment depicted, as noted above, the application system 234 may include one or more sensors 282 for sensing data indicative of one or more parameters of the nozzle 238 position, the defined deposit shape, or both. The application system 234 may be operably coupled to the one or more sensors 282 through, e.g., the network interface 270, such that the computing system 258 may receive data indicative of various operating parameters sensed by the one or more sensors 282 during cold spray application. Further, for some embodiments, such as the embodiment shown, the computing system 258 may be configured to selectively apply a cold spray 248 to the preformed sheet 220 to form deposit 232 by actuating the nozzle 238, varying the supply of cold spray 248 from cold spray reservoir 254, which may be in response to, e.g., the data sensed by the one or more sensors 282.

The network interface 270 can include any suitable components for interfacing with one or more network(s), including, for example, transmitters, receivers, ports, controllers, antennas, and/or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein may be implemented using a single computing device or multiple computing devices working in combination. Databases, memory, instructions, and applications may be implemented on a single system or distributed across multiple systems. Distributed components can operate sequentially or in parallel.

Referring still to FIG. 4, in operation, the nozzle 238 may apply a layer 280 of cold spray 248 onto the surface of the preformed sheet 220 to form the deposit 232. As used herein, a layer 280 is an amount of cold spray material that is applied during one period of activation of the nozzle 238 at a defined position. That is, as noted above, the nozzle 238 may be actuated into a defined position along the frame 240 necessary to build up the deposit 232 by the application system 234, activated to apply a layer 280 of cold spray 248 onto the surface of the preformed sheet 220 while the frame 240 moves along the rail 242, then deactivated after a specified amount of time (e.g. after the frame 240 moves along the length 218 of the preformed sheet 220 in the Z-direction) at the conclusion of the layer 280. Then, the nozzle 238 may be actuated into another defined position necessary to build up the deposit 232 or may stay in the previously defined position, activated to apply another layer 280 of cold spray 248, and then deactivated after a specified amount of time at the conclusion of that layer 280. In the present disclosure, when a layer 280 may be described as "on" or "over" another layer or substrate, it may be understood that the layers can either be directly contacting each other or have another layer or feature between the layers, unless expressly stated to the contrary.

To apply the layer 280, the nozzle 238 may receive a high-pressure gas and feedstock of the cold spray 248, such as through the conduit 256. During cold spraying, the cold spray 248 is introduced at a high pressure into the gas stream and emitted from the nozzle 238. The deposit 232 is formed when the cold spray 248 impacts the preformed sheet 220 and/or a previous layer 280 of the deposit 232.

Additionally, for the embodiment depicted, the deposit 232 further includes a plurality of layers 246. The plurality of layers 246 extend along a first thickness 272, a second thickness 274, and a third thickness 276. Each layer 280 of the plurality of layers 246 may have a consistent or varied thickness. For example, the individual layer 280 may have an applied thickness of from about 0.4 mils to about 1500 mils when measured along a normal line perpendicular to a tangent line of the surface of the preformed sheet 220 and/or a previously applied layer 280.

In some instances, the first thickness 272 may be defined as the length between the defined point 230 and the forwardmost tip of the deposit 232 along the Y-axis. The first thickness 272 may extend along the Y-axis in the positive Y-direction. Further, the second thickness 274 may be defined as the length between the defined point 230 and the surface of the deposit 232 intersecting with the X-axis in the positive X-direction. Moreover, the third thickness 276 may be defined as the length between the defined point 230 and the surface of the deposit 232 intersecting with the X-axis in the negative X-direction. In some cases, the first thickness 272 may be different from the second thickness 274, and the third thickness 276. In other cases, the first thickness 272, the second thickness 274, and the third thickness 276 may be different from one another.

As the deposit 232 is built upon the preformed sheet 220 by one or more layers 280, the deposit 232 may define a curve 278, which may have any shape determined by a defined shape and operation of the airfoil 154. For example, the deposit may be formed from a plurality of layers 246 of cold spray 248. The curve 278 of the deposit 232 may be adjusted to have a defined first thickness 272, a second thickness 274, and a third thickness 276. For example, the first thickness 272, the second thickness 274, and the third thickness 276 may be defined by successive layers of the cold spray 248 relative to the defined point 230. Additionally or alternatively, the deposit 232 may have at least a section thereof defining a cross-sectional geometry that is varied with the preformed sheet 220, the blade body 194, and/or any other surface. That is, the deposit 232 may have a cross-sectional geometry that is consistent with a shape of the preformed sheet 220, the blade body 194, and/or any other surface or combination of surfaces to which the deposit 232 is applied. For example, the deposit 232 may have a cross-sectional geometry that forms a uniform thickness over the surface of the preformed sheet 220, the blade body 194, and/or any other surface. In other cases, the deposit 232 may have a cross-sectional geometry that is non-uniform (e.g. forming a taper from the flange portions 224 to the nose portion 222). In various examples, the deposit 232 may have any practicable cross-section geometry suitable for the surface to which the deposit 232 is applied.

In various examples, the position of the nozzle 238 relative to the defined point 230 may be varied from one to a subsequent layer 280. The individual layers 280 are deposited upon one another to form the plurality of layers 246. The plurality of layers 246 in turn make up the deposit 232. The determination of the placement of each layer 280 may be determined by a defined thickness, specifically a defined first thickness 272, a defined second thickness 274, and a defined third thickness 276, as will be discussed in more detail below.

Referring still to FIG. 4, the plurality of layers 246 may be made up of at least a first layer and a second layer. Further, the plurality of layers 246 may be made up by applying the first layer to the nose portion 222 of the preformed sheet 220 at a first angle. The second layer may be then applied to at least a portion of the surface of the first layer at a second angle, which may or may not be the same as the first angle. In this way, the first layer of the plurality of layer 246 may be positioned between the second layer of the plurality of layers 246 and the preformed sheet 220.

The process may be repeated for any number of layers at any angle until the defined first thickness 272, a defined second thickness 274, and a defined third thickness 276, and the defined shape of the curve 278 is achieved.

Generally, as noted above, the X-axis and the Y-axis are defined relative to the defined point 230 of the preformed sheet 220. As such, the application system 234 may be configured such that the computing system 258 is configured to activate the nozzle 238 to form a first later of the deposit 232 with the application axis 250 aligned with the Y-axis. Further, the computing system 258 may be configured to activate the actuator 244 to alter the position of the nozzle 238 to an offset position relative to the Y-axis. In this way, the computing system 258 may be configured to activate the nozzle 238 to apply a second layer of the cold spray 248 onto at least one of the first layer of the deposit 232 or the preformed sheet 220 with the actuator 244 in the offset position relative to the Y-axis. Moreover, the nozzle 238 may be configured to build up the first thickness 272 in the Y- direction, the second thickness 274 and the positive X- direction, and the third thickness 276 in the negative X-direction. In some embodiments, the first thickness 272 may be different from the second thickness 274, and/or the third thickness 276.

Further, still, in other embodiments, the deposit 232 may be made up of at least a first plurality of layers and a second plurality of layers. The first plurality of layers may be made up of at least a first layer and a second layer. The first plurality of layers may be made up by applying the first layer to the nose portion 222 of the preformed sheet 220 at a first angle. The second layer may be then applied to at least a portion of the surface of the first layer at a second angle. The first angle and the second angle may be the same angle or a varied angle from one another. Moreover, the second plurality of layers may be made up of at least a third layer and a fourth layer. The second plurality of layers may be made up by applying the third layer to at least a portion of the surface of the second layer at a third angle. The fourth layer may be then applied to at least a portion of the surface of the third layer at a fourth angle. The third angle and the fourth angle may be the same angle or a varied angle from one another. The first angle and the second angle may be different from the third angle and the fourth angle. However, in other examples, the first angle and the second angle may be common with the third angle and the fourth angle.

Additionally, each of the plurality of layers 246 may be made up of any number of individual layers 280 For example, the plurality of layers 246 may be made up of at least 2 layers and up to 1,000 (or more) layers. Furthermore, the deposit 232 may be made up of any number of the plurality of layers 246. For example, the deposit 232 may be made up of 2 pluralities of layers and up to 1,000 (or more) pluralities of layers.

Each of the plurality of layers 246 is applied by moving the nozzle 238 into a defined angle in relation to the defined point 230 in order to achieve a defined offset relative to the application axis 250 and the Y-axis. For example, following the adjustment of the nozzle 238, the computing system 258 activates the nozzle 238 to form the layer 280. As will be appreciated, the layer 280 may be applied for any duration of time necessary in order to achieve the defined shape of the curve 278 of deposit 232. As such, the nozzle 238 may be configured to move along the length 218 of the preformed sheet 220 in order to apply the individual layer 280 to the nose portion 222 of the preformed sheet 220, and/or any portion thereof. As such, the individual layer 280 may extend along the Z-axis of the preformed sheet 220 in order to achieve the defined curve 278 of the deposit 232. This process may be repeated any number of times and from any defined offset relative to the application axis 250 and the Y-axis to achieve the defined curve 278 of the deposit 232 onto the preformed sheet 220 to build-up the leading edge protector 225.

In some cases, the nozzle 238 may move between various positions in order to build up the deposit 232 layer-by-layer to form a defined final geometry of the deposit 232. For instance, in some cases, an application axis 250 of the nozzle 238 may be aligned with the Y-axis, and a first layer may be formed by activating the nozzle 238 for a defined duration. A second application of the spray material may be applied for a second duration with the nozzle 238 in the same position. Next, the nozzle 238 may be positioned at an offset position relative to the Y-axis from the previous position. For instance, the nozzle 238 may be positioned at a positive 45-degree offset from the Y-axis. Once positioned, the nozzle 238 may be activated for a third duration. In some cases, the nozzle 238 may be reactivated with the nozzle 238 in the same position. For instance, three additional layers may be formed with the nozzle 238 in the same position. In such instances, the nozzle 238 may be activated for a fourth duration, a fifth duration, and a sixth duration. Next, the nozzle 238 may be positioned at an offset position relative to the Y-axis from the previous position. For instance, the nozzle 238 may be positioned at a negative 45-degree offset from the Y-axis. Once positioned, the nozzle 238 may be activated for a seventh duration. In some cases, the nozzle 238 may be reactivated with the nozzle 238 in the same position. For instance, three additional layers may be formed with the nozzle 238 in the same position. In such instances, the nozzle 238 may be activated for an eighth duration, a ninth duration, and a tenth duration. In some cases, the application axis 250 of the nozzle 238 may be realigned with the Y-axis and an additional layer may be formed by activating the nozzle 238 for a defined eleventh duration. A second application of the spray material may be applied for a twelfth duration with the nozzle 238 in the same position. Next, the nozzle 238 may be positioned at an offset position relative to the Y-axis from the previous position. For instance, the nozzle 238 may be positioned at a positive 25-degree offset from the Y-axis. Once positioned, the nozzle 238 may be activated for a thirteenth duration. In some cases, the nozzle 238 may be reactivated with the nozzle 238 in the same position. For instance, three additional layers may be formed with the nozzle 238 in the same position. In such instances, the nozzle 238 may be activated for a fourteenth duration, a fifteenth duration, and a sixteenth duration. Next, the nozzle 238 may be positioned at an offset position relative to the Y-axis from the previous position. For instance, the nozzle 238 may be positioned at a negative 25-degree offset from the Y-axis. Once positioned, the nozzle 238 may be activated for a seventeenth duration. In some cases, the nozzle 238 may be reactivated with the nozzle 238 in the same position. For instance, three additional layers may be formed with the nozzle 238 in the same position. In such instances, the nozzle 238 may be activated for an eighteenth duration, a nineteenth duration, and a twentieth duration. The process may continue with the nozzle 238 in any position in order to build up the deposit to the defined geometry and thickness. In some cases, the movement of the nozzle 238 may be predefined based on an inputted defined geometry and thickness of the deposit 232. Additionally, in some examples, the nozzle 238 may be moved and activated based on data from the one or more sensors 282 to form a defined geometry and thickness of the deposit 232. In addition, each duration may be common with one or more other durations or varied from each of the other durations without departing from the teachings provided herein. Based on the amount of material exhausted during the defined duration, the layer 280 of the deposit 232 is formed.

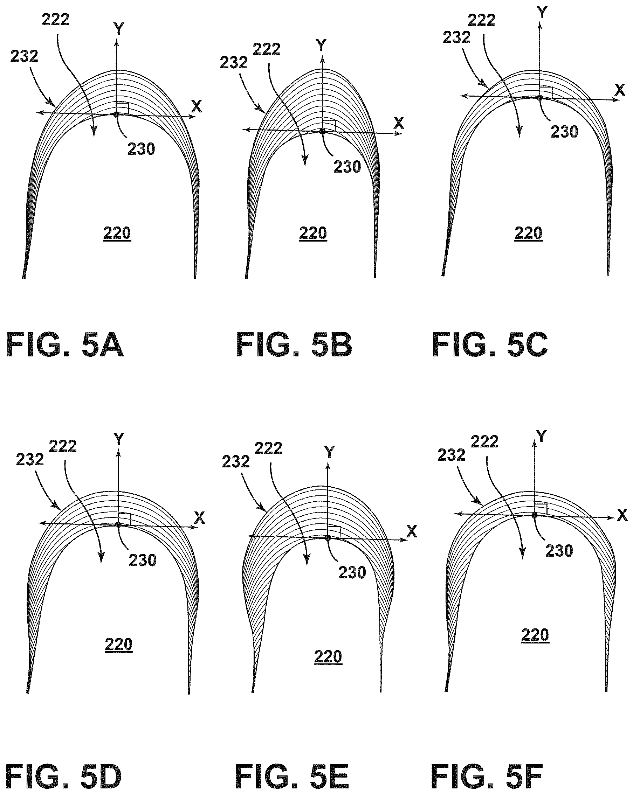

Referring now to FIGS. 5A-F, cross-sectional views of various examples of the preformed sheet 220 and the applied deposit 232 are illustrated. Each of the illustrated deposits 232 has a plurality of layers 246 applied at various angles. As shown, by applying the plurality of layers 246 at various angles, a geometry, thickness, etc. of the deposit 232 may be varied.

Referring particularly to the embodiment depicted in FIG. 5A, the deposit 232 is applied to the nose portion 222 of the preformed sheet 220. More particularly, the first plurality of layers is applied to the nose portion 222 of the preformed sheet 220 wherein the application axis 250 is generally aligned with the Y-axis. In the example depicted in FIG. 5A, the first plurality of layers is formed by 50 consecutive layers from the nozzle position. Next, a second plurality of layers are applied to at least a part of the nose portion 222 of the preformed sheet 220 and at least a part of the surface of the first plurality of layers. The second plurality of layers are applied in such a way that the application axis 250 is offset from the Y-axis in the positive direction by 25 degrees. In the example depicted in FIG. 5A, the second plurality of layers is formed by 50 consecutive individual layers 280 from the same nozzle position. Finally, a third plurality of layers are applied to at least a part of the nose portion 222 of the preformed sheet 220, at least a part surface of the first plurality of layers, and/or at least a part of the surface of the second plurality of layers. The third plurality of layers are applied in such a way that the application axis 250 is offset from the Y-axis in the negative direction by 25 degrees. In the example depicted in FIG. 5A, the third plurality of layers is formed by 50 consecutive layers from the same nozzle position.

Referring now to the embodiment depicted in FIG. 5B, the deposit 232 is be applied to the nose portion 222 of the preformed sheet 220. More particularly, the first plurality of layers is applied to the nose portion 222 of the preformed sheet 220 wherein the application axis 250 is generally aligned with the Y-axis. In the example depicted in FIG. 5B, the first plurality of layers may be formed by 100 consecutive layers from the same degree offset. Next, a second plurality of layers are applied to at least a part of the nose portion 222 of the preformed sheet 220 and at least a part of the surface of the first plurality of layers. The second plurality of layers are applied in such a way that the application axis 250 is offset from the Y-axis in the positive direction by 25 degrees. In the example depicted in FIG. 5B, the second plurality of layers is formed by 100 consecutive individual layers 280 from the same degree offset. Finally, a third plurality of layers are applied to at least a part of the nose portion 222 of the preformed sheet 220, at least a part of the surface of the first plurality of layers, and at least a part of the surface of the second plurality of layers. The third plurality of layers are applied in such a way that the application axis 250 is offset from the Y-axis in the negative direction 25 degrees. In the example depicted in FIG. 5B, the third plurality of layers is formed by 100 consecutive layers from the same degree offset.

Referring now to the embodiment depicted in FIG. 5C, the deposit 232 is applied to the nose portion 222 of the preformed sheet 220. More particularly, the first plurality of layers is applied to the nose portion 222 of the preformed sheet 220 wherein the application axis 250 is 0 degrees offset from the Y-axis. In the example depicted in FIG. 5C, the first plurality of layers is formed by 2 consecutive layers from the same degree offset. Next, a second plurality of layers are applied to at least a part of the nose portion 222 of the preformed sheet 220 and at least a part of the surface of the first plurality of layers. The second plurality of layers are applied in such a way that the application axis 250 is offset from the Y-axis in the positive direction by 25 degrees. In the example depicted in FIG. 5C, the second plurality of layers is formed by 4 consecutive individual layers 280 from the same degree offset. Moreover, a third plurality of layers are applied to at least a part of the nose portion 222, at least a part of the surface of the first plurality of layers, and at least a portion of the second plurality of layers. The third plurality of layers are applied in such a way that the application axis 250 is offset from the Y-axis in the negative direction by 25 degrees. In the embodiment depicted in FIG. 5C, the third plurality of layers is formed by 4 consecutive layers from the same degree offset. Finally, the process listed above is repeated 12 times to achieve the deposit 232 as depicted in FIG. 5C.

Referring particularly to the embodiment depicted in FIG. 5D, the deposit 232 may be applied to the nose portion 222 of the preformed sheet 220. More particularly, the first plurality of layers is applied to the nose portion 222 of the preformed sheet 220 wherein the application axis 250 is generally aligned with the Y-axis. In the example depicted in FIG. 5D, the first plurality of layers is formed by 50 consecutive layers from the nozzle position. Next, a second plurality of layers are applied to at least a part of the nose portion 222 of the preformed sheet 220 and at least a part of the surface of the first plurality of layers. The second plurality of layers are applied in such a way that the application axis 250 is offset from the Y-axis in the positive direction by 45 degrees. In the example depicted in FIG. 5D, the second plurality of layers is formed by 50 consecutive individual layers 280 from the same nozzle position. Finally, a third plurality of layers are applied to at least a part of the nose portion 222 of the preformed sheet 220, at least a part surface of the first plurality of layers, and/or at least a part of the surface of the second plurality of layers. The third plurality of layers are applied in such a way that the application axis 250 is offset from the Y-axis in the negative direction by 45 degrees. In the example depicted in FIG. 5D, the third plurality of layers is formed by 50 consecutive layers from the same nozzle position.

Referring now to the embodiment depicted in FIG. 5E, the deposit 232 may be applied to the nose portion 222 of the preformed sheet 220. More particularly, the first plurality of layers is applied to the nose portion 222 of the preformed sheet 220 wherein the application axis 250 is generally aligned with the Y-axis. In the example depicted in FIG. 5E, the first plurality of layers is formed by 100 consecutive layers from the same degree offset. Next, a second plurality of layers are applied to at least a part of the nose portion 222 of the preformed sheet 220 and at least a part of the surface of the first plurality of layers. The second plurality of layers are applied in such a way that the application axis 250 is offset from the Y-axis in the positive direction by 45 degrees. In the example depicted in FIG. 5E, the second plurality of layers is formed by 100 consecutive individual layers 280 from the same degree offset. Finally, a third plurality of layers are applied to at least a part of the nose portion 222 of the preformed sheet 220, at least a part of the surface of the first plurality of layers, and at least a part of the surface of the second plurality of layers. The third plurality of layers are applied in such a way that the application axis 250 is offset from the Y-axis in the negative direction by 45 degrees. In the example depicted in FIG. 5E, the third plurality of layers may be formed by 100 consecutive layers from the same degree offset.

Referring now to the embodiment depicted in FIG. 5F, the deposit 232 may be applied to the nose portion 222 of the preformed sheet 220. More particularly, the first plurality of layers is applied to the nose portion 222 of the preformed sheet 220 wherein the application axis 250 is offset from the Y-axis by 0 degrees. In the example depicted in FIG. 5F, the first plurality of layers is formed by 2 consecutive layers from the same degree offset. Next, a second plurality of layers are applied to at least a part of the nose portion 222 of the preformed sheet 220 and at least a part of the surface of the first plurality of layers. The second plurality of layers are applied in such a way that the application axis 250 is offset from the Y-axis in the positive direction by 45 degrees. In the example depicted in FIG. 5F, the second plurality of layers is formed by 4 consecutive individual layers 280 from the same degree offset. Moreover, a third plurality of layers are applied to at least a part of the nose portion 222, at least a part of the surface of the first plurality of layers, and at least a portion of the second plurality of layers. The third plurality of layers are applied in such a way that the application axis 250 is offset from the Y-axis in the negative direction by 45 degrees. In the example depicted in FIG. 5F, the third plurality of layers is formed by 4 consecutive layers from the same degree offset. Finally, the process listed above is repeated 12 times to achieve the deposit 232 in the embodiment depicted in FIG. 5F.

In various cases, following the application of any of the above processes referenced regarding FIGS. 5A-F, a post-processing procedure may be applied to alter at least one of the properties of the airfoil 154. For example, the post-processing procedure may involve altering the tensile strength or the modulus of elasticity of the airfoil 154. In other cases, the post-processing procedure may alter both the tensile strength and the modulus elasticity of the airfoil 154. Further, the post-processing procedure may be any suitable procedure, or combination of procedures capable of altering at least one of the properties of airfoil 154. For example, the post-processing procedure may involve at least one of a hot isostatic pressure treatment, a solution treatment, or an age heat treatment. For instance, the post-processing procedure may involve a hot isostatic pressure treatment followed by a solution treatment and an age heat treatment. In other cases, the post-processing procedure may only involve the solution treatment followed by the age heat treatment. In various cases, the post-processing procedure may involve any one or combination of procedures suitable for altering at least one of the properties of the airfoil 154.

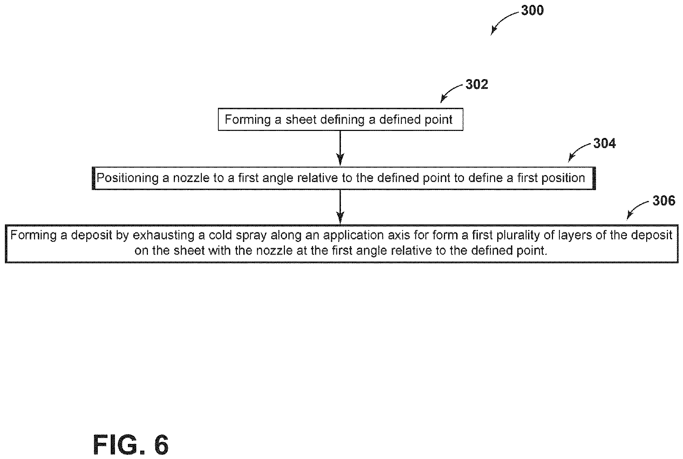

Referring now to FIG. 6, a flow diagram of some embodiments of a method for forming a deposit is illustrated in accordance with aspects of the present subject matter. In general, the method 300 will be described herein with reference to the engine 100 and the application system 234 described above with reference to FIGS. 1-5F. However, it will be appreciated by those of ordinary skill in the art that the disclosed method 300 may generally be utilized with any suitable application system 234 and/or may be utilized in connection with a system having any other suitable system configuration. In addition, although FIG. 6 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

At step 302, the method 300 includes forming a metallic sheet defining a defined point. As described above, the preformed sheet may be made of a metallic material. The preformed sheet includes the nose portion, the flange portions, the top portion, the bottom portion, the pressure surface, and the suction surface. As such, the nose portion defines the defined point along any point on the surface of the nose portion. The sheet may be shaped through any means, such as through the use of a mandrel, a hydraulic press, a manual press, etc., and/or any practicable method or combination of methods for shaping the sheet.

At step 304, method 300 may include positioning a nozzle to a first angle relative to the defined point to define a first position. As described above, the computing system may actuate the nozzle along the frame and/or the rail of the applicator system relative to the defined point. In this way, the computing system may position the nozzle in any position relative to the defined point to define the first position. For example, positioning the nozzle may involve actuating the frame, application system, and/or the nozzle in accordance with the instructions from the computing system relative to the defined point on the nose portion of the preformed sheet. As such, the computing system may position the nozzle to the first position using any practicable means, such as instructions, a calculation based on a defined curve, and/or any means or combination of means of determining a first position for the nozzle.

At step 306, method 300 may include forming a deposit by exhausting a cold spray along an application axis to form a first plurality of layers of the deposit on the sheet with the nozzle at the first angle relative to the defined point. As described above, after positioning the nozzle to the first position, the deposit may be formed by exhausting the cold spray along the application axis. The application axis may be defined between the tip of the nozzle to the defined point. The application axis may define various angles and various lengths as the nozzle may be moved relative to the defined point. Further, the exhaust of the cold spray may form the first plurality of layers of the deposit onto the preformed sheet at the first angle relative to the defined point. For example, the first plurality of layers may be made up of at least a first layer and a second layer. The first plurality of layers may be made up by applying the first layer to the nose portion of the preformed sheet at a first angle. Further, the application of each of the layers to make up the first plurality of layers is then repeated any number of times that is determined necessary by the computing system to achieve the defined curve for the deposit. For example, the first plurality of layers may be made up of at least 2 individual layers and up to 100 individual layers.

In some cases, method 300 may include any number of additional steps. In some cases, the additional steps may include positioning the nozzle at a second angle relative to the defined point to define a second position and exhausting the cold spray along the application axis with the nozzle at the second angle relative to the defined point to form a second plurality of layers of the deposit on at least one of the sheet and the first plurality of layers. As described above, the computing system may actuate the nozzle along the frame and/or the rail of the applicator system relative to the defined point. In this way, the computing system may position the nozzle in any position relative to the defined point to define the second position. For example, positioning the nozzle may involve actuating the frame, application system, and/or the nozzle in accordance with the instructions from the computing system relative to the defined point on the nose portion of the preformed sheet. As such, the computing system may position the nozzle to the second position using any practicable means, such as instructions, a calculation based on a defined curve, and/or any means or combination of means of determining a first position for the nozzle. Further, after positioning the nozzle to the second position, the deposit may be formed by exhausting the cold spray along the application axis. The application axis may be defined between the tip of the nozzle to the defined point. The application axis may define various angles and various lengths as the nozzle may be moved relative to the defined point. Further, the exhaust of the cold spray may form the second plurality of layers of the deposit onto the preformed sheet at the second angle relative to the defined point. For example, the second plurality of layers may be then applied to at least a portion of the surface of the first plurality of layers and the preformed sheet at a second angle. The first angle and the second angle may be the same angle or a varied angle from one another. Further, the application of each of the layers to make up the second plurality of layers is then repeated any number of times that is determined necessary by the computing system to achieve the defined curve for the deposit. For example, the second plurality of layers may be made up of at least 2 individual layers and up to 100 individual layers.

In some cases, method 300 may also include positioning the nozzle at a third angle relative to the defined point to define a third position and exhausting the cold pray along the application axis with the nozzle at the third angle relative to the defined point to form a third plurality of layers of the deposit on at least one of the preformed sheet, the first plurality of layer, or the second plurality of layers. As described above, the computing system may position the application system at a third angle to build up the deposit and achieve the defined curve. The computing system may actuate the nozzle along the frame and/or the rail of the applicator system relative to the defined point. In this way, the computing system may position the nozzle in any position relative to the defined point to define the second position. For example, positioning the nozzle may involve actuating the frame, application system, and/or the nozzle in accordance with the instructions from the computing system relative to the defined point on the nose portion of the preformed sheet. As such, the computing system may position the nozzle to the third position using any practicable means, such as instructions, a calculation based on a defined curve, and/or any means or combination of means of determining a first position for the nozzle. Further, after positioning the nozzle to the third position, the deposit may be formed by exhausting the cold spray along the application axis. The application axis may be defined between the tip of the nozzle to the defined point. The application axis may define various angles and various lengths as the nozzle may be moved relative to the defined point. Further, the exhaust of the cold spray may form the third plurality of layers of the deposit onto the preformed sheet at the third angle relative to the defined point. For example, the third plurality layers may be then applied to at least a portion of the surface of the first plurality of layers, the second plurality of layers, and/or the preformed sheet at a third angle. The first angle, the second angle, and/or the third angle may be the same angle or a varied angle from one another. Further, the application of each of the layers to make up the third plurality of layers is then repeated any number of times that is determined necessary by the computing system to achieve the defined curve for the deposit. For example, the third plurality of layers may be made up of at least 2 individual layers and up to 100 individual layers.

In some cases, method 300 may include wherein a first layer of the first plurality of layers is exhausted from the nozzle for a first duration and a second layer of the first plurality of layers is exhausted from the nozzle for a second duration, the first duration different than the second duration. As described above, the first plurality of layers may be made up of at least a first layer and a second layer. In some cases, the application axis of the nozzle may be aligned to a defined position and a first layer may be formed by activating the nozzle for the first duration. A second application of the spray material may be applied for the second duration with the nozzle in the same position or a different position to form the second layer of the first plurality of layers. The first duration and the second duration may be different from one another.

In some cases, the method 300 may further include wherein a first layer of the first plurality of layers is exhausted from the nozzle for a first duration and a second layer of the first plurality of layers is exhausted from the nozzle for a second duration, the first duration equal to the second duration. As described above, the first plurality of layers may be made up of at least a first layer and a second layer. In some cases, the application axis of the nozzle may be aligned to a defined position and a first layer may be formed by activating the nozzle for the first duration. A second application of the spray material may be applied for the second duration with the nozzle in the same position or a different position to form the second layer of the first plurality of layers. The first duration and the second duration may be equal.

In some cases, the method 300 may further include wherein a first layer of the first plurality of layers is exhausted from the nozzle for a first duration and a first layer of the second plurality of layers is exhausted from the nozzle for a third duration, the first duration different than the third duration. As described above, the first plurality of layers may be made up of at least a first layer and a second layer. In some cases, the application axis of the nozzle may be aligned to a defined position and a first layer may be formed by activating the nozzle for the first duration. A second application of the spray material may be applied for the third duration with the nozzle in the same position or a different position to form the second layer of the first plurality of layers. The first duration and the third duration may be different from one another.

In some cases, the method 300 may further include performing a post-processing procedure to alter a property of the deposit. As described above, the finished leading edge protector including the preformed sheet and the deposit may be subjected to a post-processing procedure. For example, the leading edge protector may receive a post-processing procedure involving a hot isostatic pressure treatment followed by a solution treatment and an age heat treatment in order to alter at least one of the tensile strength or the modulus of elasticity of the leading edge protector. In various cases, the leading edge protector may receive any one or combination of suitable treatments for altering at least one of the properties of the deposit.

Method 300 may be repeated any number of times, involving any number of rearrangements of the existing steps to achieve a curve of the deposit as determined by the computing system. Further, the method may involve applying any number of layers and/or plurality of layers from any angle as determined by the computing system.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Further aspects are provided by the subject matter of the following clauses:
An airfoil defining a chordwise direction for an aircraft engine, the airfoil comprising: a blade body; and a leading edge protector operably coupled to the blade body, the leading edge protector comprising: a preformed sheet defining a nose portion and two flange portions, wherein the nose portion and the flange portions are arranged in the chordwise direction, the preformed sheet further defining a defined point located on the nose portion, wherein an X-axis and a Y-axis are defined relative to the defined point; and a deposit operably coupled with the nose portion of the preformed sheet and extending from the nose portion along the flange portions on opposing sides of the defined point in the X-axis direction.

An airfoil for an aircraft engine, the airfoil defining a chordwise direction, the airfoil comprising: a blade body; and a leading edge protector operably coupled to the blade body, the leading edge protector comprising: a preformed sheet defining a nose portion and two flange portions, wherein the nose portion and the flange portions are arranged along the chordwise direction, the preformed sheet further defining a defined point located on the nose portion, wherein an X-axis and a Y-axis are defined relative to the defined point; and a deposit operably coupled with the nose portion of the preformed sheet and extending from the nose portion and along the flange portions on opposing sides of the defined point in the X-axis direction.

The airfoil of any preceding clause, wherein the deposit defines a first thickness in the Y-axis direction, a second thickness in a positive X-axis direction, and a third thickness in a negative X-axis direction.

The airfoilof any preceding clause, wherein the first thickness, the second thickness, and the third thickness are defined by successive layers of a cold spray relative to the defined point.

The airfoil of any preceding clause, wherein the deposit is formed from a plurality of layers of a cold spray.

The airfoil of any preceding clause, wherein a first layer of the plurality of layers is positioned between a second layer of the plurality of layers and the preformed sheet.

The airfoil of any preceding clause, wherein the first thickness is different from the second thickness and the third thickness.

The airfoil of any preceding clause, wherein the airfoil is a fan blade of an unducted aircraft engine.

The airfoil of any preceding clause, wherein the preformed sheet is comprised of at least one of aluminum alloy, titanium alloy, nickel alloy, or steel.

A leading-edge protector for an aircraft engine, comprising: a preformed sheet defining a nose portion and two flange portions, wherein the nose portion and the flange portions are arranged along a chordwise direction, the preformed sheet further defining a defined point located on the nose portion, wherein an X-axis and a Y-axis are defined relative to the defined point; and a deposit operably coupled with the nose portion of the preformed sheet and extending from the nose portion and along the flange portions on opposing sides of the defined point in the X-axis direction.

The leading-edge protector of any preceding clause, wherein the deposit defines a first thickness in the Y-axis direction, a second thickness in a positive X-axis direction, and a third thickness in a negative X-axis direction.

The leading-edge protector of any preceding clause, wherein the first thickness, the second thickness, and the third thickness are defined by successive layers of a cold spray relative to the defined point.

The leading-edge protector of any preceding clause, wherein the deposit is formed from a plurality of layers of a cold spray.

The leading-edge protector of any preceding clause, wherein a first layer of the plurality of layers is positioned between a second layer of the plurality of layers and the preformed sheet.

The leading-edge protector of any preceding clause, wherein the first thickness is different from the second thickness and the third thickness.

The leading-edge protector of any preceding clause, wherein the leading-edge protector is coupled to a fan blade of an unducted aircraft engine.

The leading-edge protector of any preceding clause, wherein the preformed sheet is comprised of at least one of aluminum alloy, titanium alloy, nickel alloy, or steel.

A manufacturing system for a leading edge protector including a preformed sheet, the system comprising: an applicator comprising: a nozzle; a frame operably coupled with the nozzle and supporting the nozzle in a defined position; and an actuator operably coupled with the nozzle and the frame, the actuator configured to alter a position of the nozzle along the frame relative to a defined point of the preformed sheet; and a computing system operably coupled with the nozzle, the computing system including a processor and associated memory, the memory storing instructions that, when implemented by the processor, configure the computing system to: activate the actuator to position the nozzle in a defined position relative to a defined point of the preformed sheet; and activate the nozzle to apply a cold spray to the preformed sheet to form a deposit on a nose portion of the preformed sheet, the cold spray exhausted from the nozzle along an application axis from a tip of the nozzle to the defined point.

The manufacturing system of any preceding clause wherein an X-axis and a Y-axis are defined relative to the defined point of the preformed sheet, and wherein the computing system is configured to activate the nozzle to form a first layer of the deposit with the application axis aligned with the Y-axis.

The manufacturing system of any preceding clause, wherein the computing system is further configured to: activate the actuator to alter the position of the nozzle to an offset position relative to the Y-axis.

The manufacturing system of any preceding clause, wherein the computing system is further configured to: activate the nozzle to apply a second layer of the cold spray onto at least one of the first layer of the deposit or the preformed sheet with the actuator in the offset position relative to the Y-axis.

The manufacturing system of any preceding clause, wherein the nozzle is configured to build up a first thickness in a Y-axis direction, a second thickness in a positive X-axis direction, and a third thickness in a negative X-direction, the first thickness different from at least one of the second thickness or the third thickness.

A method of manufacturing a leading edge protector, the method comprising: forming a metallic preformed sheet; positioning a nozzle to a first angle relative to a defined point on the preformed sheet to define a first position; and forming a deposit by exhausting a cold spray along an application axis to form a first plurality of layers of the deposit on the preformed sheet with the nozzle at the first angle relative to the defined point.

The method of any preceding clause, further comprising: positioning the nozzle at a second angle relative to the defined point to define a second position; exhausting the cold spray along the application axis with the nozzle at the second angle relative to the defined to form a second plurality of layers of the deposit on at least one of the preformed sheet and the first plurality of layers.

The method of any preceding clause, further comprising: positioning the nozzle at a third angle relative to the defined point to define a third position; and exhausting the cold spray along the application axis with the nozzle at the third angle relative to the defined to form a third plurality of layers of the deposit on at least one of the preformed sheet, the first plurality of layers, or the second plurality of layers.

The method of any preceding clause, wherein a first layer of the first plurality of layers is exhausted from the nozzle for a first duration and a second layer of the first plurality of layers is exhausted from the nozzle for a second duration, the first duration different than the second duration.

The method of any preceding clause, wherein a first layer of the first plurality of layers is exhausted from the nozzle for a first duration and a second layer of the first plurality of layers is exhausted from the nozzle for a second duration, the first duration equal to the second duration.

The method of any preceding clause, wherein a first layer of the first plurality of layers is exhausted from the nozzle for a first duration and a first layer of the second plurality of layers is exhausted from the nozzle for a third duration, the first duration different than the third duration.

The method of any preceding clause, further comprising: performing a post-processing procedure to alter a property of the deposit.

The method of any preceding clause, further comprising: positioning the nozzle at a second angle relative to the defined point to define a second position; exhausting the cold spray along the application axis with the nozzle at the second angle relative to the defined point to form a second plurality of layers of the deposit on at least one of the preformed sheet and the first plurality of layers.

The method of any preceding clause, further comprising: positioning the nozzle at a third angle relative to the defined point to define a third position; and exhausting the cold spray along the application axis with the nozzle at the third angle relative to the defined point to form a third plurality of layers of the deposit on at least one of the preformed sheet, the first plurality of layers, or the second plurality of layers.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An airfoil (154) for an aircraft engine (100), the airfoil (154) defining a chordwise direction, the airfoil (154) comprising:
a blade body (194); and
a leading edge protector (225) operably coupled to the blade body (194), the leading edge protector (225) comprising:
a preformed sheet (220) defining a nose portion (222) and two flange portions (224), wherein the nose portion (222) and the flange portions (224) are arranged along the chordwise direction, the preformed sheet (220) further defining a defined point (230) located on the nose portion (222), wherein an X-axis and a Y-axis are defined relative to the defined point (230); and
a deposit (232) operably coupled with the nose portion (222) of the preformed sheet (220) and extending from the nose portion (222) and along the flange portions (224) on opposing sides of the defined point (230) in the X-axis direction.

2. The airfoil (154) of claim 1, wherein the deposit (232) defines a first thickness (272) in the Y-axis direction, a second thickness (274) in a positive X-axis direction, and a third thickness (276) in a negative X-axis direction.

3. The airfoil (154) of claim 2, wherein the first thickness (272), the second thickness (274), and the third thickness (276) are defined by successive layers (280) of a cold spray (248) relative to the defined point (230).

4. The airfoil (154) of any preceding claim, wherein the deposit (232) is formed from a plurality of layers (246) of a cold spray (248).

5. The airfoil (154) of claim 4, wherein a first layer (280) of the plurality of layers (246) is positioned between a second layer (280) of the plurality of layers (246) and the preformed sheet (220).

6. The airfoil (154) of claim 2, wherein the first thickness (272) is different from the second thickness (274) and the third thickness (276).

7. The airfoil (154) of any preceding claim, wherein the airfoil (154) is a fan blade (154) of an unducted aircraft engine (100).

8. The airfoil (154) of any preceding claim, wherein the preformed sheet (220) is comprised of at least one of aluminum alloy, titanium alloy, nickel alloy, or steel.

9. A method (300) of manufacturing a leading edge protector (225), the method (300) comprising:
forming a metallic preformed sheet (220);
positioning a nozzle (238) to a first angle relative to a defined point (230) on the preformed sheet (220) to define a first position; and
forming a deposit (232) by exhausting a cold spray (248) along an application axis (250) to form a first plurality of layers (246) of the deposit (232) on the preformed sheet (220) with the nozzle (238) at the first angle relative to the defined point (230).

10. The method (300) of claim 9, further comprising:
positioning the nozzle (238) at a second angle relative to the defined point (230) to define a second position;
exhausting the cold spray (248) along the application axis (250) with the nozzle (238) at the second angle relative to the defined point (230) to form a second plurality of layers (246) of the deposit (232) on at least one of the preformed sheet (220) and the first plurality of layers (246).

11. The method (300) of claim 10, further comprising:
positioning the nozzle (238) at a third angle relative to the defined point (230) to define a third position; and
exhausting the cold spray (248) along the application axis (250) with the nozzle (238) at the third angle relative to the defined point (230) to form a third plurality of layers (246) of the deposit (232) on at least one of the preformed sheet (220), the first plurality of layers (246), or the second plurality of layers (246).

12. The method (300) of any one of claims 9-11, wherein a first layer (280) of the first plurality of layers (246) is exhausted from the nozzle (238) for a first duration and a second layer (280) of the first plurality of layers (246) is exhausted from the nozzle (238) for a second duration, the first duration different than the second duration.

13. The method (300) of any one of claims 9-12, wherein a first layer (280) of the first plurality of layers (246) is exhausted from the nozzle (238) for a first duration and a second layer (280) of the first plurality of layers (246) is exhausted from the nozzle (238) for a second duration, the first duration equal to the second duration.

14. The method (300) of any one of claims 9-13, wherein a first layer (280) of the first plurality of layers (246) is exhausted from the nozzle (238) for a first duration and a first layer (280) of the second plurality of layers (246) is exhausted from the nozzle (238) for a third duration, the first duration different than the third duration.

15. The method (300) of any preceding claim, further comprising:
performing a post-processing procedure to alter a property of the deposit (232).
